# EUROPÄISCHE PATENTSCHRIFT

(11) **EP 3 518 000 B1**
(45) Veröffentlichungstag und Bekanntmachung des Hinweises auf die Patenterteilung: **06.01.2021**
(21) Anmeldenummer: 19150450.5
(22) Anmeldetag: 07.01.2019
(51) Int. Cl.: G01S 17/42, G01S 7/481, G01S 17/93

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 26.01.2018 DE 102018101847
(43) Veröffentlichungstag der Anmeldung: 31.07.2019
(73) Patentinhaber: SICK AG, 79183 Waldkirch (DE)
(72) Erfinder: Gimpel, Hartmut, 79194 Gundelfingen (DE); Hug, Gottfried, 79183 Waldkirch (DE); Clemens, Klaus, 79367 Weisweil (DE)

(56) Entgegenhaltungen:
- WO-A1-2016/160961
- WO-A1-2019/136854
- WO-A2-2008/008970
- DE-A1-102004 014 041
- US-A1- 2016 266 242

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 15.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Aus der Anordnung der mehreren Abtaststrahlen oder Abtastebenen ergibt sich, welche Informationen aus dem dreidimensionalen Raumbereich gewonnen werden. Beispielhafte Parameter sind die Anzahl und Dichte der Abtaststrahlen. Je nach Anwendung kann hier ein ganz unterschiedlicher Bedarf bestehen. Wünschenswert wäre hier eine einfache Anpassung der Strahlkonfiguration, um unterschiedliche Anforderungen bedienen zu können.

Manche herkömmliche Mehrstrahl-Laserscanner verwenden eine monolithische Zeile von Lichtsendern beziehungsweise Lichtempfängern. Dann sind aber die Abtastebenen auf einen bestimmten, äquidistanten Abstand festgelegt und liegen dicht an dicht, weil der Platz auf dem Halbleitermaterial der Sende- und Empfangselemente optimal genutzt werden soll. Somit besteht allenfalls noch die Möglichkeit, Daten aus in einer bestimmten Anwendung nicht gebrauchten Abtastebenen zu verwerfen, aber das ist keine Anpassung des Geräts, sondern nutzt im Gegenteil dessen Leistungsfähigkeit nur teilweise aus.

Die US 8 767 190 B2 wählt den Ansatz, für jede Abtastebene einen eigenen Lichtsender und Lichtempfänger vorzusehen. Damit besteht dann prinzipiell die Möglichkeit, jede einzelne Abtastebene wie gewünscht einzujustieren. Das System ist zwar hoch flexibel, jedoch nur um den Preis eines enormen Aufwands für die Bauteile und die jeweilige individuelle Justage.

In der EP 2 863 176 A2 wird eine rotierende Plattform offenbart, auf der verschiedene Erfassungsmodule rotieren können. Ausführungsformen mit Erfassungsmodulen für optoelektronische Abstandsmessung sehen jedoch ebenfalls nur einen Abtaststrahl je Modul vor. Das wird einerseits für eine zweikanlige, redundante Messwerterfassung vorgeschlagen. In einer anderen Ausführungsform werden mehrere abstandsmessende Erfassungsmodule ungefähr in Richtung der Drehachse ausgerichtet und dabei gegeneinander verkippt. Wie schon in US 8 767 190 B2 ist dann für eine bestimmte Konfiguration von Abtastebenen eine individuelle Einstellung der Kippwinkel erforderlich. Somit wird eine höhere Flexibilität mit einfachen Mitteln immer noch nicht erreicht.

Die DE 10 2004 014 041 A1 befasst sich mit einem Sensorsystem zur Hinderniserkennung nach Art eines Laserscanners, das eine Laserzeile und eine Reihe von Fotodioden verwendet. Derartige Reihenanordnungen haben die oben schon genannten Nachteile, dass sie auf äquidistante, dichte Abstände der Abtastebenen festlegen. In einer Ausführungsform der DE 10 2004 014 041 A1 sind drei derartige Abtastsysteme um jeweils 120° in Drehrichtung gegeneinander versetzt angeordnet, deren Elevationswinkel durch einen Hubmotor variiert werden kann. Damit werden die von jeweiligen Abtastsystemen erfassten Sichtbereiche so eingestellt, dass sie gemeinsam einen möglichst großen, zusammenhängenden Elevationswinkelbereich abdecken. Das genannte Zahlenbeispiel stellt die Elevationswinkel in den drei Abtastsystemen auf {-18°,-12°, -6°}, {-6°, 0°, 6°}, {6°, 12°, 18°} ein. Immer noch bleibt die Flexibilität vergleichsweise klein.

Aus der WO 2016/160961 A1 und der WO2008/008970 A2 sind weitere modulare LIDAR-Systeme bekannt.

Es ist daher Aufgabe der Erfindung, ein flexibleres gattungsgemäßes Mehrstrahlsystem anzugeben.

Diese Aufgabe wird durch einen optoelektronischen Sensor und ein Verfahren zur Erfassung von Objekten in einem Überwachungsbereich nach Anspruch 1 beziehungsweise 15 gelöst. Mehrere Abtastmodule erzeugen und empfangen jeweils mehrere Lichtstrahlen und weisen dafür mindestens einen Lichtsender und mindestens einen Lichtempfänger auf. Die Lichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Eine um eine Drehachse rotierende oder zumindest schwenkbare Abtasteinheit sorgt dafür, dass die Abtaststrahlen den Überwachungsbereich periodisch abtasten. Eine Auswertungseinheit gewinnt aus den Empfangssignalen Informationen über die Objekte an den jeweils angetasteten Punkten.

Die Erfindung geht von dem Grundgedanken aus, durch Verdrehen und optional Verkippen von Abtastmodulen angepasste Konfigurationen von Abtaststrahlen zu ermöglichen, beziehungsweise aufgrund der Bewegung um die Drehachse angepasste Konfigurationen von Abtastebenen. Dazu werden Abtastmodule um einen Drehwinkel verdreht und optional um einen Kippwinkel verkippt. Diese Winkel sind bezüglich der Hauptblickrichtung des Abtastmoduls gemessen beziehungsweise definiert. Ein Abtastmodul hat zwar mehrere Abtaststrahlen, die vorzugsweise nicht alle parallel und damit in dieselbe Blickrichtung ausgerichtet sind. Das Abtastmodul als Ganzes besitzt dennoch eine einzige Hauptblickrichtung, die beispielsweise durch dessen Mittelachse, einen zentralen Abtaststrahl oder eine mittlere Richtung aller Abtaststrahlen des Abtastmoduls gegeben ist. Nun wäre die herkömmliche, weder verkippte noch verdrehte Ausrichtung eines Abtastmoduls diejenige mit Hauptblickrichtung in die zentrale Abtastebene senkrecht zur Drehachse hinein und bei aufrechter Anordnung des Abtastmoduls. Optional wird die Hauptblickrichtung aus diesem Kippwinkel Null verkippt und entspricht damit nicht mehr der zentralen Abtastebene und erfindungsgemäß wird das Abtastmodul aus diesem Drehwinkel Null verdreht und hat damit eine nicht aufrechte Orientierung bis hin zu auf der Seite liegend. Zur Vervollständigung der Begrifflichkeiten sei noch erwähnt, dass in dieser Beschreibung der Winkel, um den sich die Abtasteinheit um die Drehachse bewegt, als Scanwinkel bezeichnet wird. Ein Winkelabstand zwischen den Abtaststrahlen dagegen wird Elevationswinkel genannt, wobei es sich genaugenommen nur um einen effektiven Elevationswinkel nach Projektion mit dem Drehwinkel handelt, wie später genauer erläutert.

Die Erfindung hat den Vorteil, dass es sehr einfach möglich wird, die Strahl- oder Ebenenkonfiguration zu verändern. Es sind zahlreiche unterschiedliche Anordnungen von Messebenen möglich, und dies weitgehend ohne Neuentwicklung und ohne den hohen Justageaufwand im Falle einzeln einstellbarer Strahlen lediglich durch Verkippen beziehungsweise Verdrehen von Abtastmodulen. Damit kann im Verlauf eines Produktlebens schnell und flexibel auf veränderte Anforderungen reagiert werden, und es können mühelos neue Endgerätevarianten erzeugt werden, bis hin zur individuellen Fertigung in Einzelstücken für spezielle Kundenwünsche.

Die Abtastmodule sind vorzugsweise in der Abtasteinheit untergebracht. Der Sensor weist damit einen um die Drehachse beweglichen Messkopf auf. Das ist eine Bauweise, die sich besonders gut mit verschiedenen Konfigurationen von verkippten und verdrehten Abtastmodulen kombinieren lässt. Alternativ ist auch möglich, dass die Abtastmodule nicht beweglich angeordnet sind und die Abtaststrahlen durch einen um die Drehachse beweglichen Spiegel periodisch abgelenkt werden, insbesondere einen Drehspiegel oder ein Polygonspiegelrad.

Der Kippwinkel und/oder der Drehwinkel ist bevorzugt statisch. Es gibt demnach keinen Verstellmechanismus, um diese Winkel auch noch im Betrieb zu verändern. Für ein bestimmtes Gerät werden vielmehr die Abtastmodule bei bestimmten Winkeln montiert.

Das schließt nicht aus, dass in den Geräten Montageplätze für Abtastmodule vorgesehen sind, die eine Montage bei unterschiedlichen Winkeln zulassen, wobei man sich dann während der Montage für bestimmte Winkel entscheidet.

Der Kippwinkel liegt bevorzugt in einer Umgebung von Null, insbesondere im Bereich von ±60° oder weniger, etwa ±50°, ±40° oder ±30°. Damit ist die Hauptblickrichtung in etwa radial nach außen und weicht jedenfalls deutlich von der Richtung der Drehachse ab. Die Abtastebenen liegen dementsprechend in einer Umgebung der zentralen Abtastebene senkrecht zur Drehachse. Vorzugsweise ist für zumindest ein Abtastmodul, wenn nicht mehrere oder alle, der Kippwinkel ungleich Null. Die zentrale Abtastebene kann trotzdem erfasst werden, falls in der Konfiguration der Abtaststrahlen gewünscht, weil wiederum die Lichtstrahlen in einem verkippten Abtastmodul gegen dessen Hauptblickrichtung verkippt sind.

Der Sensor weist bevorzugt zwei bis zehn Abtastmodule auf. Typischerweise sind es zwei bis vier Abtastmodule. Bei mehr als zehn Abtastmodulen wird der Gesamtaufbau recht komplex, prinzipiell ausgeschlossen ist dieser Fall aber nicht, falls entsprechend zahlreiche Abtaststrahlen benötigt werden.

Ein Abtastmodul erzeugt bevorzugt zwei bis zehn Lichtstrahlen. Einige bevorzugte Anzahlen sind drei bis sechs und acht. Erneut sind auch größere Zahlen prinzipiell denkbar, etwa sechzehn. Mehr Flexibilität erhält man aber mit einem Abtastmodul mit nur einigen Lichtstrahlen, und eine Vielzahl von Abtaststrahlen wird dann durch Vervielfachung der Abtastmodule erreicht.

Zumindest einige, vorzugsweise alle Lichtstrahlen eines Abtastmoduls weisen vorteilhafterweise einen gegenseitigen Winkelversatz auf. Somit sind zumindest nicht alle Lichtstrahlen eines Abtastmoduls zueinander parallel. Nochmals bevorzugt bilden die Lichtstrahlen eines Abtastmoduls ein gleichmäßiges Winkelraster. Das Winkelraster ist möglicherweise gleichmäßig nur im dreidimensionalen Raum, etwa ein Quadrant, die die auf eine verkippte oder verdrehte Achse der Abtastmodule projizierten planaren Winkel selbst sind gar nicht gleichmäßig. In beiden Fällen sind die Bausteine einer Abtaststrahlenkonfiguration erst einmal regelmäßig und dadurch gut handhabbar. Durch Kombination von Abtastmodulen lassen sich dennoch vielfältige, auch unregelmäßige Abtaststrahlenkonfigurationen aufbauen. Die Abtastmodule weisen bevorzugt Lichtsender beziehungsweise Lichtempfänger auf, mit denen Lichtstrahlen auch mit größeren und unregelmäßigen gegenseitigen Abständen angeordnet werden können. Die Lichtstrahlen eines Abtastmoduls sind also vorzugsweise so angeordnet, dass zwischen den davon erzeugten Abtastebenen jeweils nicht abgetastete Bereiche des Sichtfeldes liegen. Das gelingt insbesondere durch einzelne und damit einzeln ausrichtbare Lichtquellen beziehungsweise Lichtempfangselemente, also keinen Sender- oder Empfängerzeilen, die stets dicht aneinander liegende Abtastebenen erzeugen.
Die Abtastmodule sind bevorzugt derart verkippt und/oder verdreht, dass Abtastebenen mit gleichmäßigem Winkelabstand entstehen. Das bezieht sich nun auf die Gesamtkonfiguration, nicht mehr einzelne Abtastmodule. Es gibt verschiedene Möglichkeiten, insgesamt einen gleichmäßigen Winkelabstand zu erzielen. Die Abtastmodule können sich den gesamten Winkelbereich aufteilen und einander direkt benachbart ergänzen. Ebenso ist denkbar, dass Abtastmodule das Winkelraster von anderen Abtastmodulen verfeinern und/oder vergleichmäßigen. Präzise müsste in der Diskussion von Winkeln zwischen Abtastebenen der Begriff Elevationswinkel verwendet werden, aber dies wird hier und im Folgenden aus dem Kontext klar und vielfach sprachlich vereinfacht.

Die Abtastmodule sind bevorzugt derart verkippt und/oder verdreht, dass in zumindest einem Winkelbereich Abtastebenen mit dichterem Winkelabstand entstehen. In solchen Ausführungsformen wird gezielt von einem gleichmäßigen Winkelabstand abgewichen, weil bestimmte Winkelbereiche interessanter sind als andere und daraus mehr Daten gewonnen werden sollen. Eines von zahlreichen Beispielen ist ein Sensor für ein Fahrzeug, der vor allem Daten in Höhe von Verkehrsströmen und relevanten Hindernissen gewinnen soll und nur wenige Daten vom Boden beziehungsweise aus der Höhe. Der dichter abgetastete Bereich muss aber nicht zentral um einen Elevationswinkel 0° liegen, sondern kann ebenso nach oben oder unten verschoben sein, oder es sind mehrere Winkelbereiche dichter überwacht als andere. Auch muss der Winkelabstand in den dichter und weniger dicht überwachten Winkelbereichen für sich nicht konstant sein.

Die Abtastmodule sind bevorzugt derart verkippt und/oder verdreht, dass zumindest einige mehrfach abgetastete Abtastebenen entstehen. Dadurch werden redundante Messdaten gewonnen, um beispielsweise durch Bildung eines Mittelwertes Messwerte mit höherer Genauigkeit zu erzeugen. In der Sicherheitstechnik werden redundante Messerfassungen genutzt, um das Gerät gegen Ausfälle abzusichern.

Die Abtastmodule sind bevorzugt derart verkippt und/oder verdreht, dass zumindest ein Winkelbereich ohne Abtastebenen entsteht. In solchen Ausführungsformen gibt es Lücken im Elevationswinkelbereich, in denen gar nicht überwacht wird. Die Abtastmodule ergänzen einander also nicht unmittelbar benachbart, sondern lassen einen Freiraum dazwischen, in dem keine Daten erzeugt werden. An dieser Stelle sind natürlich Lücken oder Freiräume gemeint, die größer sind als der unter Berücksichtigung des Drehwinkels gegebene kleinste Abstand zwischen den diskreten Abtaststrahlen innerhalb eines Abtastmoduls.

Die Abtastmodule sind bevorzugt derart verkippt und/oder verdreht, dass Abtastebenen eines Abtastmoduls zwischen Abtastebenen eines anderen Abtastmoduls liegen. Somit überlappen die Winkelbereiche, die von den beteiligten Abtastmodulen erfasst werden, um dort die Dichte der erfassten Daten in Elevation zu erhöhen oder redundante Daten zu erfassen. Entsprechend dieser Ausführungsform und derjenigen des vorigen Absatzes kann es vorteilhaft sein, wenn Abtastmodule einander nicht direkt benachbart ergänzen, indem Lücken und/oder Überlappungen vorgesehen werden.

Die Abtasteinheit weist bevorzugt eine Vielzahl von Montageplätzen für Abtastmodule auf, die insbesondere nicht alle mit einem Abtastmodul besetzt sind. Somit ist die Abtasteinheit bereits auf die Aufnahme von Abtastmodulen vorbereitet. Dabei kann an den jeweiligen Montageplätzen bereits eine Verkippung und/oder Verdrehung für das dort montierte Abtastmodul vorgegeben sein, oder es erlaubt zumindest in gewissen Winkelbereichen noch eine Anpassung. Es besteht eine sehr einfache Möglichkeit, zusätzliche Varianten zu bilden, indem Montageplätze ungenutzt bleiben. Die Abtasteinheit dann sozusagen eine Maximalkonfiguration an, wobei auch kleinere Teilkonfigurationen mit weniger Abtastebenen wählbar sind.

Die Abtastmodule sind bevorzugt untereinander identisch aufgebaut. Dadurch wird eine wesentlich beschleunigte Produktentwicklung und Variantenbildung ermöglicht. In neuen Endgerätevarianten kann eine Hauptkomponente in Form des Abtastmoduls unverändert bleiben. Die Spezifikation und die Validierung dieses Abtastmoduls muss nur ein einziges Mal erfolgen. Das verringert auch über hohe Stückzahlen der immer gleichen Abtastmodule trotz unterschiedlicher Endgeräte deutlich die Herstellkosten, zumal die Abtastmodule sogar für die diversen Endgeräte an einem gemeinsamen Produktionsplatz herstellbar sind. Es wäre alternativ auch denkbar, einige wenige Typen unterschiedlicher Abtastmodule für noch mehr Varianten zu nutzen. Zwar lassen sich praktisch alle relevanten Abtastebenenkonfigurationen auch mit untereinander identischen Abtastmodulen durch Variation von Kipp- und Drehwinnkel aufbauen. Dennoch kann es vorteilhaft sein, beispielsweise je ein zwei-, vier- und achtstrahliges Abtastmodul und/oder Abtastmodule mit zwei oder drei unterschiedlichen Winkelrastern vorzusehen. Das eröffnet keine neuen Abtastebenenkonfigurationen, denn beispielsweise ein achstrahliges Abtastmodul ist durch vier zweistrahlige Abtastmodule und ein Abtastmodul mit feinerem Winkelraster durch ein entsprechend verdrehtes Abtastmodul mit groberem Winkelraster ersetzbar. Möglicherweise gibt es aber einen Vorteil, weil man insgesamt mit weniger Komponenten und/oder, gerade im Falle extremer Drehwinkel, mit weniger Bauraum auskommt.

Zumindest einige Abtastmodule sind bevorzugt übereinander und/oder in Drehrichtung zueinander versetzt angeordnet. Es gibt im Grundsatz diese zwei Freiheitsgrade, um mehrere Abtastmodule physisch in der Abtasteinheit unterzubringen. Dabei spielt ein Versatz in Drehrichtung, also im Scanwinkel, für bei üblichen Drehzahlen und der dagegen quasi-statischen Szenerie keine Rolle. Ein Höhenversatz von Abtastmodulen kann sich je nach Baugröße geringfügig auf die Abtastebenen auswirken.

Vorzugsweise sind in einem Abtastmodul mehrere Lichtstrahlen im Querschnitt in einem zweidimensionalen Muster angeordnet. Bei dem Muster geht es um die Anordnung der Abtaststrahlen und nicht der Lichtsender und Lichtempfänger, obwohl das übereinstimmen kann, wenn jeweils ein Lichtsender und ein Lichtempfänger einem Abtaststrahl entsprechen. Das ist möglich, muss jedoch wegen Strahlaufspaltung, Strahlvereinigung und/oder Strahlablenkung, mehreren Lichtemissionsflächen oder Lichtempfangselementen je Lichtsender oder Lichtempfänger beziehungsweise der Zuständigkeit eines Lichtsenders beziehungsweise Lichtempfängers für mehrere Abtaststrahlen nicht dasselbe sein, aber auf diesen Unterschied wird nicht im Einzelnen eingegangen. Zweidimensionale Muster haben gegebenenfalls optische oder bauliche Vorteile innerhalb des Abtastmoduls. Wegen der Bewegung der Abtasteinheit um die Drehachse wirkt sich nur der Anteil des zweidimensionalen Musters in Höhenrichtung senkrecht zu der Bewegung aus, das zweidimensionale Muster wirkt deshalb effektiv wie eine auf die Höhenrichtung projizierte Linienanordnung, die alternativ auch denkbar ist.

Mindestens zwei Abtastmodule weisen bevorzugt eine gemeinsame Leiterplatte auf. Darauf sind insbesondere die Lichtsender und/oder Lichtempfänger untergebracht. Eine solche gemeinsame Leiterplatte verringert die Komplexität weiter und ist vorzugsweise bei einer Anordnung der beteiligten Abtastmodule übereinander oder um Scanwinkel um 180° versetzt geeignet, wobei im letzteren Fall Vorder- und Rückseite genutzt werden. Durch Flexplatinen oder dergleichen sind auch andere Scanwinkel möglich.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines als Laserscanner ausgebildeten optischen Sensors;
- Fig. 2: eine schematische Darstellung eines einzelnen Abtastmoduls mit dessen Abtaststrahlen oder -ebenen;
- Fig. 3a: eine Schnittdarstellung eines Abtastmoduls zur Erläuterung des Kippwinkels;
- Fig. 3b: eine Draufsicht auf den Ein- und Austrittsbereich der Lichtstrahlen eines Abtastmoduls zur Erläuterung des Drehwinkels;
- Fig. 3c: eine perspektivische Darstellung einer beispielhaften Konfiguration von vier Abtastmodulen mit verschiedenen Kipp- und Drehwinkeln;
- Fig. 4a: eine Beispielkonfiguration mit drei Abtastmodulen, die gleichmäßig beabstandete Abtastebenen erzeugen;
- Fig. 4b: eine Beispielkonfiguration mit drei Abtastmodule, die durch Überlappung ebenfalls gleichmäßig, jedoch dichter beabstandete Abtastebenen erzeugen;
- Fig. 5a: eine Beispielkonfiguration mit drei Abtastmodulen, die redundante Abtastebenen erzeugen;
- Fig. 5b: eine Beispielkonfiguration mit zwei Abtastmodulen, die teilweise redundante Abtastebenen erzeugen;
- Fig. 6: eine Beispielkonfiguration mit drei Abtastmodulen, die in unterschiedlichen Höhenlagen unterschiedlich dicht beabstandete Abtastebenen erzeugen;
- Fig. 7: eine Draufsicht auf ein Abtastmodul zur Erläuterung der Verdichtung von Abtastebenen durch Variation des Drehwinkels;
- Fig. 8a: eine Beispielkonfiguration mit drei Abtastmodulen, von denen zwei einen variierten Drehwinkel aufweisen, um so einen Bereich mit äquidistant beabstandeten sowie zusätzlichen, weiter ab liegenden Abtastebenen zu erzeugen;
- Fig. 8b: eine Beispielkonfiguration ähnlich Figur 8b, jedoch mit größerem Teilbereich, dafür weiter beabstandet äquidistant liegenden Abtastebenen;
- Fig. 9a-c: Beispielkonfigurationen mit einem Abtastmodul, das vier zu einem Quadrat angeordnete Abtaststrahlen aufweist, und Darstellungen der Auswirkung einer Variation von dessen Drehwinkel;
- Fig. 9d-f: Beispielkonfigurationen mit einem Abtastmodul, das neun zu einem Quadrat angeordnete Abtaststrahlen aufweist, und Darstellungen der Auswirkung einer Variation von dessen Drehwinkel;
- Fig. 10a-c: Darstellungen von Konfigurationen mit mehreren Abtastmodulen in unterschiedlichen Höhenlagen und/oder Scanwinkeln, die eine gemeinsame Leiterplatte nutzen;
- Fig. 11a: eine Draufsicht längs der Drehachse auf eine Beispielkonfiguration mit vier im Scanwinkel gegeneinander versetzten Abtastmodulen;
- Fig. 11b: eine Draufsicht ähnlich Figur 11a, hier jedoch mit sechs vorgesehenen Montageplätzen für Abtastmodule, von denen nur fünf tatsächlich besetzt sind; und
- Fig. 12: eine Beispielkonfigurationen mit zwei Abtastmodulen und einer periodischen Ablenkung durch ein bewegliches Spiegelelement anstelle eines beweglichen Abtastkopfes.

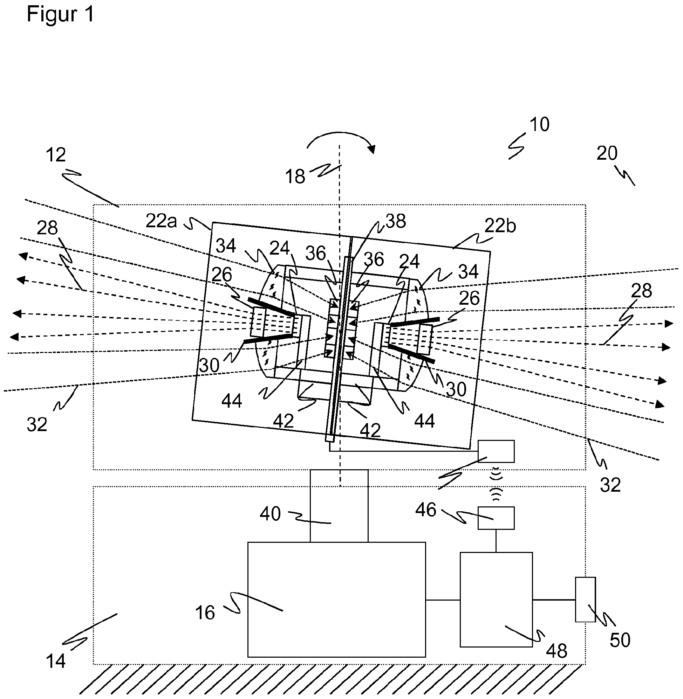

Figur 1 zeigt eine schematische Schnittdarstellung durch einen optoelektronischen Sensor 10 in einer Ausführungsform als modularer Vielstrahl-Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

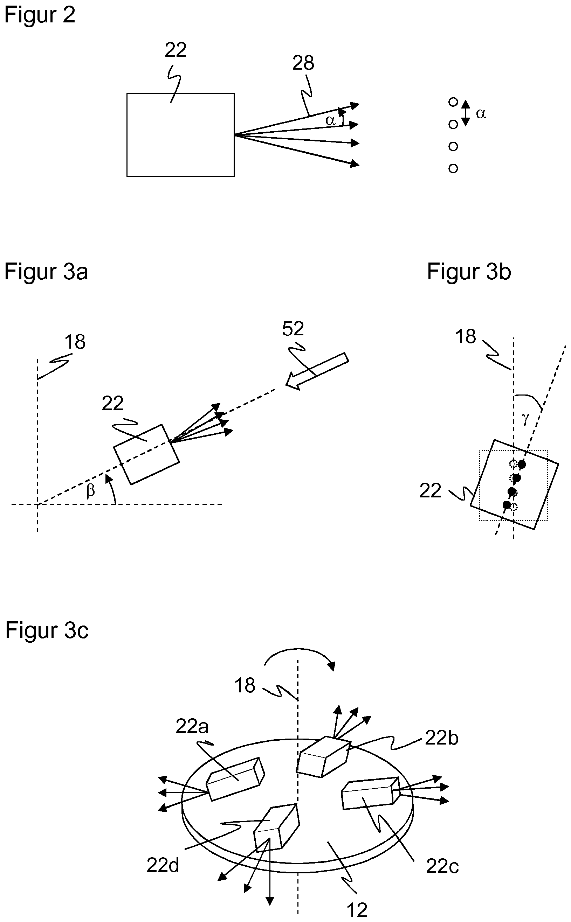

In der Abtasteinheit 12 sind mehrere Abtastmodule 22a-b vorgesehen. Im dargestellten Beispiel sind es zwei Abtastmodule 22a-b, allgemein sind bis zu zehn und im Einzelfall auch mehr Abtastmodule denkbar. Die Abtastmodule 22a-b stehen schräg, sind also gegenüber der Drehachse 18 verkippt. Gemäß der Erfindung können sie gegen ihre eigene Mittelachse verdreht sein, was in der Schnittdarstellung der Figur 1 nicht erkennbar ist. Die Kippwinkel und Drehwinkel von Abtastmodulen 22a-b werden später unter Bezugnahme auf die Figuren 2 bis 11 genauer erläutert.

Die Abtastmodule 22a-b weisen jeweils eine Lichtsendereinheit 24 auf, beispielsweise mit LEDs oder Lasern in Form von Kantenemittern oder VCSELs, die mit Hilfe einer nur als Funktionsblock dargestellten gemeinsamen Sendeoptik 26 mehrere Sendelichtstrahlen 28 mit gegenseitigem Winkelversatz erzeugen, die in den Überwachungsbereich 20 ausgesandt werden. Dafür können je nach Ausführungsform mehrere Lichtquellen mit eigenen Leiterplatten oder gemeinsamer Leiterplatte für die mehreren Sendelichtstrahlen 28 eingesetzt sein, oder das Licht einer Lichtquelle oder einiger Lichtquellen wird durch ein Strahlteilerelement oder ein diffraktives optisches Element aufgeteilt. Im dargestellten Beispiel sind es vier Sendelichtstrahlen 28, allgemein sind typischerweise zwei bis zehn Sendelichtstrahlen je Abtastmodul 22a-b vorgesehen, unter Umständen auch mehr.

Zur Vermeidung von Streulicht innerhalb des Sensors 10 kann der interne Lichtweg der Sendelichtstrahlen 28 von einem lichtundurchlässigen Tubus 30 abgeschirmt werden. Treffen die Sendelichtstrahlen 28 in dem Überwachungsbereich 20 auf ein Objekt, so kehren entsprechende remittierte Lichtstrahlen 32 zu dem Sensor 10 zurück. Die remittierten Lichtstrahlen 32 werden von einer Empfangsoptik 34 auf einen Lichtempfänger 36 geführt. Der Lichtempfänger 36 ist ortsauflösend und deshalb in der Lage, aus jedem der remittierten Lichtstrahlen 32 ein eigenes elektrisches Empfangssignal zu erzeugen. Dafür sind mehrere Photodioden oder APDs (Avalanche Diode) denkbar, aber auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor. Es ist auch denkbar, mehrere remittierte Lichtstrahlen 32 mittels der Empfangsoptik 34 auf dasselbe Empfangselement zu leiten. Die Unterscheidung der remittierten Lichtstrahlen 32 ist dann beispielsweise durch Multiplexing, d.h. sequentielle Aktivierung von Sendelichtstrahlen 28 möglich.

Der Lichtempfänger 36 ist in dieser Ausführungsform auf einer Leiterkarte 38 angeordnet, die auf der Drehachse 18 liegt und mit der Welle 40 des Antriebs 16 verbunden ist. Die Empfangsoptik 34 stützt sich durch Beinchen 42 auf der Leiterkarte 38 ab und hält eine weitere Leiterkarte 44 der Lichtsendereinheit 24. Die beiden Leiterkarten 38, 44 sind untereinander verbunden und können auch als gemeinsame Flexprint-Leiterkarte ausgebildet sein.

Der in Figur 1 gezeigte optische Aufbau mit zwei übereinander geschichteten Leiterkarten 38, 44 oder Leiterkartenbereichen und einer zentral innerhalb der Empfangsoptik 34 angeordneten gemeinsamen Sendeoptik 26 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung oder die Verwendung eines Umlenk- oder Strahlteilerspiegels möglich. Weiterhin ist denkbar, Lichtsendereinheit 24 und Lichtempfänger 36 auf einer gemeinsamen Leiterkarte zu montieren, bei gegenüber Figur 1 veränderter Anordnung der Optiken auch auf einer gemeinsamen Leiterkarte, die in nur einer Ebene liegt. Die dargestellten gemeinsamen Optiken 26, 34 sind besonders vorteilhaft, alternativ jedoch auch mehrere Optiken für mehrere oder sogar einzelne Lichtstrahlen 28, 32 möglich.

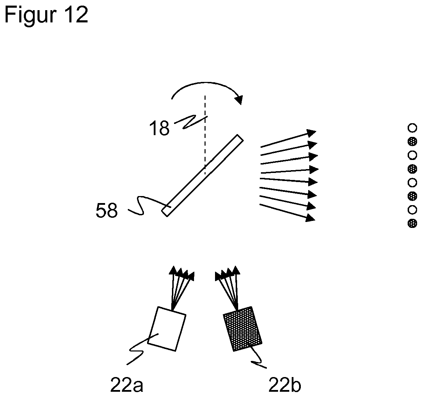

Auch die grundsätzliche Anordnung mit Abtastmodulen 22a-b in der drehbaren Abtasteinheit 12 ist ein Ausführungsbeispiel. Alternativ ist auch möglich, stehende Abtastmodule 22a-b zu verwenden, deren Lichtstrahlen 26, 32 dann durch ein um die Drehachse 18 bewegliches Spiegelelement abgelenkt werden. Entsprechende Ausführungsformen werden später unter Bezugnahme auf die Figur 12 erläutert.

Eine berührungslose Versorgungs- und Datenschnittstelle 46 verbindet die bewegliche Abtasteinheit 12 mit der ruhenden Sockeleinheit 14. Dort befindet sich eine Steuer- und Auswertungseinheit 48, die zumindest teilweise auch auf der Leiterkarte 38 oder an anderem Ort in der Abtasteinheit 12 untergebracht sein kann. Die Steuer- und Auswertungseinheit 48 steuert die Lichtsendereinheit 24 und erhält das Empfangssignal des Lichtempfängers 36 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 32 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 50 ausgegeben werden. Die Sensorschnittstelle 50 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 50 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Eine alternative Ausführungsform schwenkt die Abtasteinheit 12 anstelle der Drehbewegung hin und her. Auch eine Ausgestaltung als einfacher Mehrstrahltaster ohne eigene Scanbewegung ist vorstellbar, der dann praktisch nur aus der ruhenden Abtasteinheit 12 mit entsprechender Elektronik, jedoch ohne Sockeleinheit 14 besteht.

Während der Rotation des Sensors 10 wird durch jeden der Sendelichtstrahlen 28 jeweils eine Fläche abgetastet. Nur bei einem Elevationswinkel von 0°, also einem in Figur 1 nur annähernd vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 28, die in unterschiedlichen Winkeln nach oben und unten abgelenkt werden, entsteht insgesamt als Abtastgebilde eine Art Schachtelung von mehreren Sanduhren. Auch diese Flächen werden hier vereinfachend als Abtastebenen bezeichnet.

Figur 2 zeigt rein schematisch ein einzelnes Abtastmodul 22 mit dessen Sendelichtstrahlen 28. Die Sendelichtstrahlen 28 stehen auch stellvertretend für die zugehörigen remittierten Lichtstrahlen 32 und werden vielfach als Abtaststrahlen bezeichnet. Da durch die Bewegung um die Drehachse 18 Abtastebenen entstehen, wird auch die Formulierung verwendet, dass ein Abtastmodul 22 Abtastebenen und nicht lediglich Abtaststrahlen erzeugt.

Das Abtastmodul 22 erzeugt Sendelichtstrahlen 28 mit gegenseitigem Winkelabstand α, der vorzugsweise, aber nicht notwendig gleichmäßig ist. Die sich daraus ergebende Konfiguration von Abtastebenen ist auf der rechten Seite der Figur 2 durch kleine Kreise angedeutet. In diesem Beispiel resultieren vier in ihrem Elevationswinkel α gleichmäßig beabstandete Abtastebenen.

Das Abtastmodul 22 ist in Figur 2 bewusst ohne dessen in Figur 1 bereits erläuterte Elemente gezeigt, um zu unterstreichen, dass es diverse Ausgestaltungsmöglichkeiten gibt und hier letztlich nur auf die erzeugten Abtaststrahlen und -ebenen ankommt. Zusätzlich zu den elektrooptischen und optischen Komponenten für die Erzeugung von Sendelichtstrahlen 28 und den Empfang von remittierten Lichtstrahlen 32 kann ein Abtastmodul 22 auch eigene Auswertungselektronik umfassen, so dass es direkt Abstandsdaten ausgibt. Alternativ werden nur rohe oder vorverarbeitete Empfangssignale an die Auswertungseinheit 48 oder auch eine Auswertungselektronik in der Abtasteinheit 12 für ein Abtastmodul 22 oder mehrere Abtastmodule 22a-b weitergegeben, oder die Auswertungsaufgaben werden verteilt.

In den anschließend beschriebenen Mehrfachanordnungen von Abtastmodulen 22 sind die einzelnen Abtastmodule 22 vorzugsweise untereinander identisch. Ebenfalls bevorzugt sind in sich symmetrische Abtastmodule 22, weil dies Vorteile für das Optikdesign mit sich bringt. Erfindungsgemäß werden Abtastmodule 22 mit unterschiedlichen Drehwinkeln und optional Kippwinkeln kombiniert, wodurch dann insgesamt durchaus auch unregelmäßige Abtastebenenkonfigurationen entstehen.

Anhand der Figuren 3a-b werden zunächst die Begriffe Kippwinkel und Drehwinkel genauer eingeführt. Figur 3a ist eine weitere Schnittdarstellung eines Abtastmoduls 22 mit Kippwinkel β. Der Kippwinkel β wird gegen eine Senkrechte zu der Drehachse 18 gemessen, ist also der Winkel, um den die Hauptblickrichtung oder Mittelachse des Abtastmoduls 22 aus einer zentralen Scanebene β=0 verkippt ist. Die einzelnen Abtaststrahlen des Abtastmoduls 22 weichen von dem Kippwinkel β noch entsprechend ihrem gegenseitigen Winkelabstand α ab. Die Hauptblickrichtung liegt vorzugsweise zumindest grob radial nach außen, also senkrecht zu der Drehachse 18 und jedenfalls deutlich von der Richtung der Drehachse abweichend. Ein beispielhafter Bereich für den Kippwinkel β ist [-60°, +60°], wobei auch stärkere Beschränkungen etwa auf [-50°, +50°], [-40°, +40°] oder [-30°, +30°] denkbar sind.

Figur 3b zeigt eine Draufsicht auf den Ein- und Austrittsbereich eines Abtastmoduls 22. Die Perspektive dieser Draufsicht ist in Figur 3a durch einen Pfeil 52 angedeutet. Das Abtastmodul 22 ist hier gegen die mit gepunkteten Linien gezeigte aufrechte Orientierung um einen Drehwinkel γ verdreht. Der Drehwinkel γ misst demnach eine Verdrehung des Abtastmoduls 22 um dessen eigene Hauptblickrichtung. Mit zunehmendem Drehwinkel rücken effektiv, nämlich in Höhenrichtung, die Abtaststrahlen dichter zusammen, bis bei auf der Seite liegendem Abtastmodul 22 mit γ=90° nur noch die Abtastebene in Hauptblickrichtung abgetastet wird, dafür mehrfach.

Figur 3c zeigt in perspektivischer Darstellung ein Beispiel mit vier Abtastmodulen 22a-d bei unterschiedlichen Kippwinkeln β und Drehwinkeln γ. Um die Begrifflichkeiten zu vervollständigen, misst der Scanwinkel die Drehung der Abtasteinheit 12 um die Drehachse 18, und der Elevationswinkel bezeichnet wie üblich die Höhenlage, präziser den Winkel gegen die Ebene senkrecht zur Drehachse 18.

Erfindungsgemäß werden Abtastmodule 22a-b mit unterschiedlichen Kippwinkeln β (optional) Drehwinkeln γ kombiniert, um verschiedenste Abtastebenenkonfigurationen zu erhalten, wobei zumindest ein Kippwinkel β und/oder ein Drehwinkel γ ungleich Null ist.

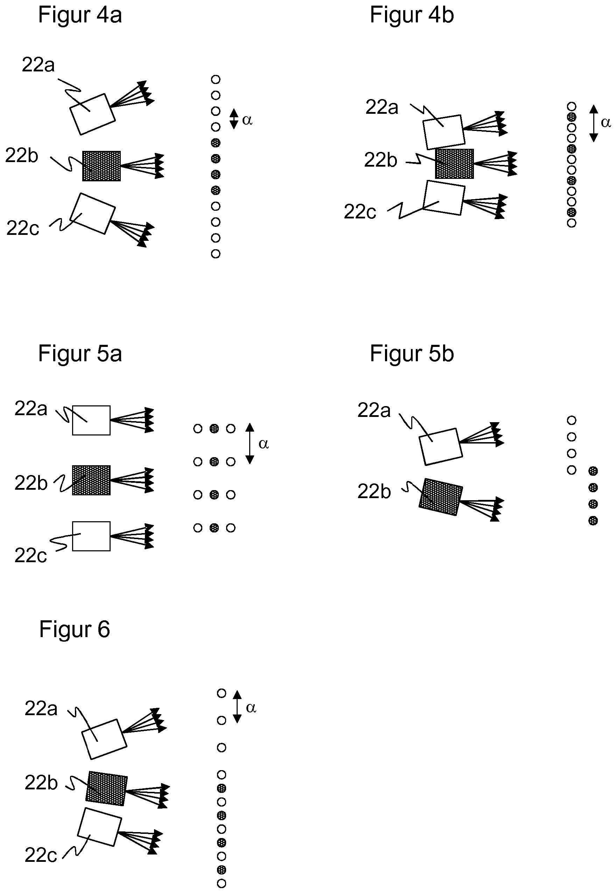

Dazu folgen nun zahlreiche, nicht abschließende Beispiele. Ein einzelnes Abtastmodul 22 erzeugt dabei weiterhin beispielhaft vier äquidistante Abtaststrahlen und damit Abtastebenen, wobei sowohl die Anzahl vier als auch das gleichmäßige Winkelraster innerhalb eines Abtastmoduls 22 anders gewählt sein kann. In den ersten Beispielen mit Bezugnahme auf die Figuren 4a bis 6 sind die Drehwinkel der beteiligten Abtastmodule 22 jeweils gleich, insbesondere Null, der Drehwinkel kann abweichend für einzelne Abtastmodule 22 oder alle Abtastmodule gemeinsam variiert werden.

Figur 4a zeigt eine Beispielkonfiguration mit drei Abtastmodulen 22a-c mit Kippwinkel β derart, dass die Abtastmodule 22a-c einander direkt benachbart ergänzen und so gemeinsam einen großen Elevationswinkelbereich abdecken. Dabei entspricht naturgemäß die Abtastdichte derjenigen der einzelnen Abtastmodule 22a-c, da jedes exklusiv für einen bestimmten Elevationswinkelbereich zuständig ist. Bei untereinander identischen Abtastmodulen 22a-c oder zumindest jeweils gleichen Winkelabständen innerhalb der Abtastmodule 22a-c ergibt sich so eine regelmäßige Anordnung der Abtastebenen. Auf der rechten Seite in Figur 4a sind die Abtastebenen durch kleine Kreise angedeutet, wobei hier und im Folgenden die Schraffur dieser Kreise und des zugehörigen Abtastmoduls 22a-c gleich gewählt ist, um die Zusammengehörigkeit erkennbar zu machen.

Figur 4b zeigt eine Beispielkonfiguration, in welcher drei Abtastmodule 22a-c weniger zueinander verkippt sind, so dass eine dichtere, überlappende Abtastebenenkonfiguration entsteht. Überlappend bedeutet, dass Abtastebenen eines Abtastmoduls 22a-c zwischen Abtastebenen eines anderen Abtastmoduls 22a-c liegen. Nochmals anders ausgedrückt verfeinern Abtastmodule 22a-c das Winkelraster eines anderen Abtastmoduls 22a-c.

In Figur 4a und 4b entsteht jeweils durch direkte Nachbarschaft beziehungsweise Überlappung ein zusammenhängender, von Abtastebenen durchsetzter Elevationswinkelbereich. Abweichend kann es aber auch eine Lücke geben, indem etwa in Figur 4a für die äußeren Abtastmodule 22a und 22c ein größerer Kippwinkel β gewählt wird. Durch Lücken oder Überlappungen entstehen also Konfigurationen, die anders als in Figur 4a keine direkte Nachbarschaft der Abtastebenen der Abtastmodule 22a-c ergeben.

Figur 5a zeigt eine weitere Beispielkonfiguration für eine redundante Erfassung, die beispielsweise im Bereich der Sicherheitstechnik vorteilhaft sein kann. In dieser Konfiguration wird dafür gesorgt, dass mehrere Abtaststrahlen dieselbe Abtastebene erfassen. Im gezeigten Beispiel erfolgt dies durch gleiche Kippwinkel β für mehrere Abtastmodule 22a-c, wobei hier durch drei gleichartig verkippte Abtastmodule 22a-c die Scanfrequenz sogar nicht nur zwei-, sondern dreifach erhöht ist. In der gezeigten Form mit β=0 fällt diese Konfiguration nur in den Schutzbereich der Ansprüche, wenn für den nicht erkennbaren Drehwinkel γ≠0 gilt, ansonsten müsste erfindungsgemäß zumindest ein Abtastmodul mit β≠0 verkippt sein. Es ist auch möglich, den Abtastmodulen 22a-c einen gegenseitigen Versatz in Richtung des Scanwinkels zu geben, etwa um jeweils 120° gegeneinander verdreht, und so die Scanfrequenz zu vervielfachen.

Figur 5b zeigt eine weitere Beispielkonfiguration zur Illustration, dass statt vollständiger Redundanz auch möglich ist, einige Abtastebenen mehrfach zu erfassen, andere aber nicht. Im gezeigten Beispiel wird durch entsprechende Kippwinkel β nur die unterste beziehungsweise oberste Abtastebene doppelt erfasst, aber es ist klar, dass dies analog auch für mehrere Abtastebenen möglich wäre.

Figur 6 zeigt eine Beispielkonfiguration mit unterschiedlicher Dichte der Abtastebenen. Im oberen Winkelbereich ist nur ein verkipptes Abtastmodul 22a zuständig, während im unteren Winkelbereich zwei auch leicht gegeneinander verkippte Abtastmodule 22b-c das Winkelraster effektiv halbieren. Entsprechend lassen sich verschiedenste Winkelbereiche mit dichterer und weniger dichter Abtastung kombinieren, wobei auch Lücken möglich sind, also Winkelbereiche, in denen über den diskreten Abstand zwischen zwei Abtaststrahlen eines Abtastmoduls 22a-c hinaus gar keine Abtastebenen liegen. Dies ist auch ein Beispiel dafür, dass mit mehreren symmetrisch aufgebauten Messmodulen Gesamt-Scanner konstruiert werden können, die eine asymmetrische Anordnung der Messstrahlen aufweisen.

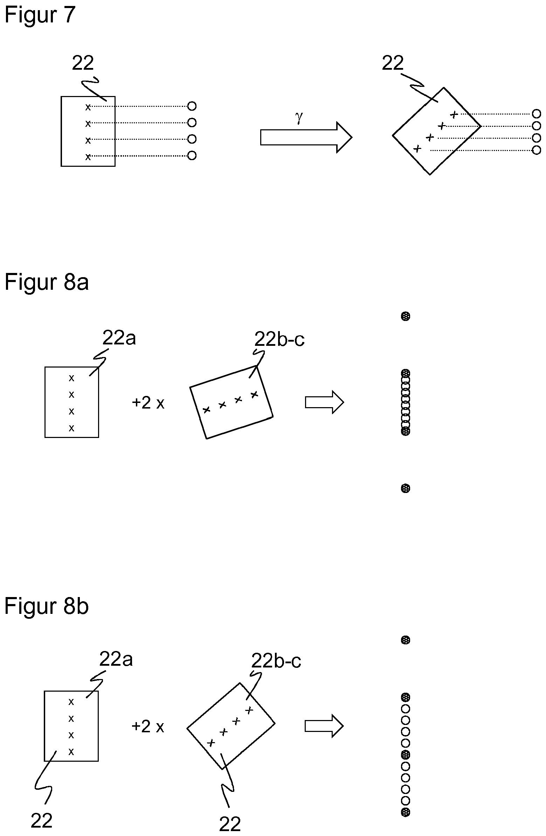

In den bisher erläuterten Beispielkonfigurationen wurde nur der Kippwinkel β variiert. Figur 7 illustriert in einer Draufsicht aus der Hauptblickrichtung wie in Figur 3b den Effekt einer Variation des Drehwinkels γ, die für sich, aber ausdrücklich auch zusammen mit einer Verkippung gemäß den Figuren 4 bis 6 kombiniert vorgenommen werde kann. Bei endlichem Drehwinkel γ rücken die Abtastebenen gleichsam als Projektion auf die Höhenrichtung oder die Drehachse 18 näher zusammen. Denn durch die Bewegung um die Drehachse 18 bewirkt der laterale Abstand, in Figur 7 in horizontaler Richtung, nur einen minimalen und zudem bei Bedarf kompensierbaren Zeitversatz der Messung. Der Drehwinkel γ ist damit ein Parameter, mit dem der effektive Winkelabstand α der Abtaststrahlen eines Abtastmoduls 22a-c verringert werden kann. Dabei sind beliebige Kombinationen von Kippwinkeln β und Drehwinkeln γ für einzelne Abtastmodule 22a-c oder Gruppen von Abtastmodulen 22a-c möglich.

Die Figuren 8a-b illustrieren, wie durch unterschiedliche Drehwinkel γ zusätzliche Abtastebenenkonfigurationen entstehen. In den Beispielen wird ein aufrechtes, also mit γ=0 nicht verdrehtes Abtastmodul 22a mit zwei bei γ≠0 verdrehten Abtastmodulen 22b-c kombiniert. Die beiden verdrehten Abtastmodule 22b-c sind zudem mit unterschiedlichen Kippwinkeln β leicht zueinander verkippt, damit sich ihre Winkelraster gegenseitig verfeinern. Dabei ist der Drehwinkel γ in Figur 8a größer als in Figur 8b. Das Ergebnis ist jeweils ein Bereich mit dichter liegenden Abtastebenen und einigen wenigen, eher vereinzelten Abtastebenen mit etwas größerem Winkelabstand. In Figur 8a ist der dichter erfasste Winkelbereich kleiner und dafür mit vielen Abtastebenen durchsetzt, in Figur 8b größer bei entsprechend geringerer Dichte der Abtastebenen.

Derartige Anordnungen sind beispielsweise vorteilhaft für autonome oder teilautonome Fahrzeuge, die mit den dichter liegenden Abtaststrahlen die vorausliegende Umgebung zur Navigation und Kollisionsvermeidung detailliert überwacht und mit den etwas weiter entfernten Strahlen Luft und Boden überwachen, etwa um sich der Ausrichtung in Elevation zu versichern und Löcher oder Treppenabgänge zu erfassen.

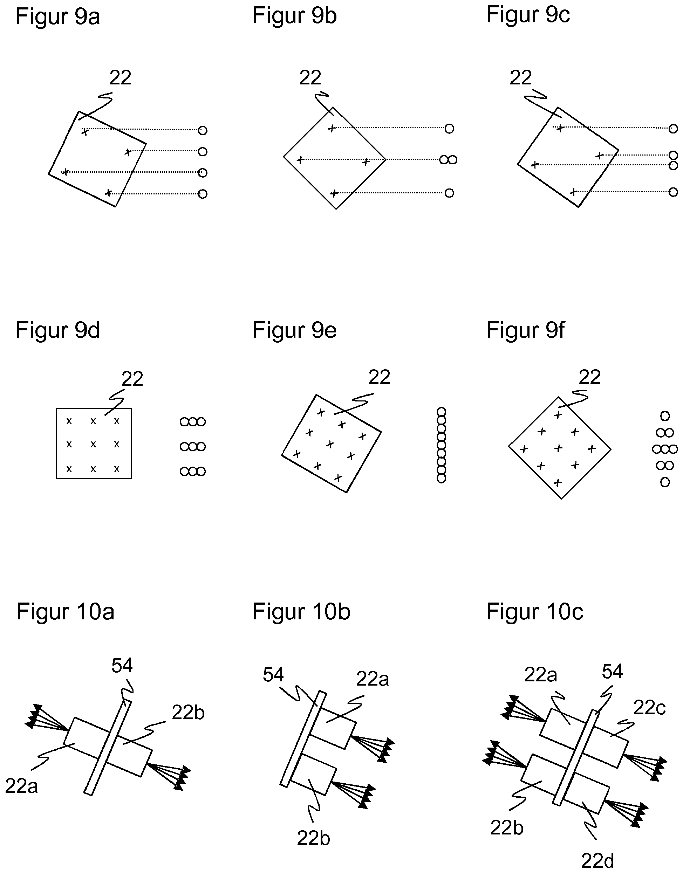

Bisher wurde davon ausgegangen, dass die Abtaststrahlen innerhalb der Abtastmodule 22 in einer Ebene liegen, d.h. die Abtaststrahlen im Querschnitt eine Linienanordnung bilden. Die Figuren 9a-f illustrieren vorteilhafte Anordnungen mit einem zweidimensionalen Querschnittsmuster der Abtaststrahlen. Dabei wird ausgenutzt, dass effektiv wegen der Bewegung um die Drehachse 18 eine Projektion auf die Höhenrichtung stattfindet, so dass sich auch zweidimensionale Muster wie Linienanordnungen verhalten. Sie bieten aber konstruktiv und optisch zusätzliche Möglichkeiten und Symmetrien.

In den Figuren 9a-c bilden die Abtaststrahlen ein 2x2-Quadrat. Damit können je nach Drehwinkel γ äquidistante Abtastebenen wie in Figur 9a, teilweise redundante Abtastebenen wie in Figur 9b oder Bereiche unterschiedlicher Dichte wie in Figur 9c erzeugt werden.

In den Figuren 9d-f bilden die Abtastebenen ein 3x3-Quadrat. Damit ergibt sich über den Drehwinkel γ die Möglichkeit, drei jeweils dreifach abgetastete Abtastebenen zu bilden wie in Figur 9d, eine Linienanordnung mit neun Abtaststrahlen zu emulieren und damit einen Winkelbereich äquidistant mit Abtastebenen abzudecken wie in Figur 9e, unterschiedliche Redundanzen mit einer äquidistanten Abtastung zu kombinieren wie in Figur 9f oder bei nochmals anderem Drehwinkel γ unregelmäßige Konfigurationen zu erzeugen. Die beiden Quadratanordnungen sind nur ein Beispiel eines zweidimensionalen Musters, hier bietet der zusätzliche Freiheitsgrad viele weitere Möglichkeiten.

Es ist für die Erfindung besonders vorteilhaft, wenn die Abtastmodule 22 untereinander baugleich sind und so gleichartige Grundbausteine für einen Sensor 10 bilden. Es kann aber andererseits auch vorteilhaft sein, Abtastmodule 22 zumindest teilweise gemeinsam aufzubauen, insbesondere mit einer gemeinsamen Leiterplatte 54 für Lichtsendereinheit 24 und/oder Lichtempfänger 36. Dazu können Vor- und Rückseite der gemeinsamen Leiterplatte 54 bei im Scanwinkel um 180° versetzter Hauptblickrichtung wie in Figur 10a verwendet werden. Auch bei benachbart, insbesondere übereinander angeordneten Abtastmodulen 22a-b wie in Figur 10b ist eine gemeinsame Leiterplatte 54 möglich, die hier von derselben Seite bestückt ist. Ein Versatz in Scanwinkel und Höhenrichtung ist auch mit gemeinsamer Leiterplatte 54 kombinierbar, wie Figur 10c zeigt. Mit Hilfe einer Flexprint-Leiterplatte oder dergleichen sind sogar ein Versatz im Scanwinkel ungleich 180° beziehungsweise unterschiedliche Kippwinkel β auf einer gemeinsamen Leiterplatte 54 denkbar.

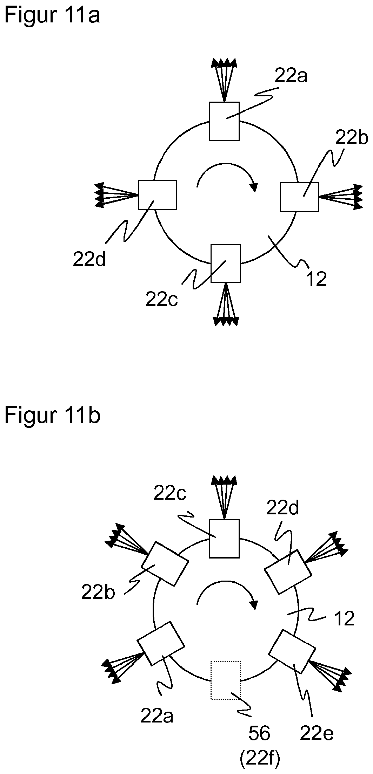

Figur 11a zeigt noch einmal die Abtasteinheit 12 in einer Draufsicht hier mit vier um jeweils 90° im Scanwinkel gegeneinander versetzten Abtastmodulen 22a-d, die mit ihrer Hauptblickrichtung radial nach außen gerichtet sind. Es wäre auch denkbar, den Strahlengang einiger oder aller Abtastmodule 22a-d durch Umlenkelemente zu falten, es kommt für die Abtastebenenkonfiguration nicht auf die Montage der Abtastmodule 22a-d selbst, sondern den optischen Effekt an.

Figur 11b zeigt eine alternative Anordnung mit Montageplätzen 56 für sechs Abtastmodule 22a-f. In diesem Fall sind nicht alle Montageplätze 56 besetzt, sondern nur fünf der sechs möglichen Abtastmodule 22a-f verbaut. Auf diese Weise kann es eine gemeinsame Plattform für eine Vielzahl von Sensoren 10 geben, in der die weitere Abtastebenenkonfiguration sehr einfach durch Weglassen von Abtastmodulen 22a-f gebildet werden.

Figur 12 illustriert eine weitere Familie von Ausführungsformen. Im Unterschied zu Figur 1 ist hier keine bewegliche Abtasteinheit 12 vorgesehen, in der sich die Abtastmodule 22 mitbewegen. Vielmehr sind die Abtastmodule 22a-b selbst stehend angeordnet, wobei dies in diesem Zusammenhang nichts mit dem Drehwinkel zu tun hat, sondern eine statische oder unbewegliche Anordnung bedeutet. Die periodische Abtastung wird durch einen Spiegel 58 erzeugt, der sich um die Drehachse 18 bewegt und vorzugsweise als Drehspiegel ausgebildet ist. Auch hier kann durch Verkippen und Verdrehen von Abtastmodulen eine Vielzahl von dreidimensionalen Abtastmustern erzeugt werden. Figur 12 zeigt nur ein Beispiel, die zahlreichen zuvor für in der Abtasteinheit 12 mitbewegte Abtastmodule 22 erläuterten Varianten sind auch mit einem Spiegel 58 möglich. Die Definition der Hauptblickrichtung kann wahlweise direkt auf das Abtastmodul 22 oder den nach dem Spiegel 58 erzeugten, durch den Spiegel 58 gefalteten Strahlengang bezogen werden. Alternativ zu einem einfachen Spiegel 58 wie in Figur 12 kann auch ein Polygonspiegelrad eingesetzt werden, mit dem bei einer Rotation nicht 360° abgetastet werden, sondern durch mehrere Spiegelfacetten ein Scanwinkelabschnitt mehrfach. Außerdem ist grundsätzlich denkbar, eine entsprechende statische Konfiguration von Abtastmodulen 22a-b ohne Drehspiegel als nicht-scannendes mehrstrahliges Messgerät zu verwenden.

Wie an zahlreichen Beispielen erläutert, erlauben die Abtastmodule 22, die insbesondere untereinander identisch sind, eine Vielzahl von Abtastebenenkonfigurationen. Der jeweilige konkrete Sensor 10 für eine bestimmte Anwendung kann mit wenig Aufwand hergestellt werden: Sollen alle Abtastebenen dicht beieinander angeordnet sein oder lieber einen großen Abstand zueinander haben, um einen großen Überwachungsbereich 20 zu ermöglichen? Sollen einige der Abtastebenen mehrfach abgetastet werden, um kürzere Ansprechzeigen oder eine Redundanz für Anwendungen der Sicherheitstechnik zu gewinnen? Sollen die Abtastebenen in einem gleichmäßigen Winkelraster angeordnet sein oder besser mehr Abtastebenen spezielle Winkelbereiche abdecken, auch wenn das zu einem ungleichmäßigen Abstand der Ebenen führen kann? All dies ist erfindungsgemäß durch Wahl der Kippwinkel β und Drehwinkel γ möglich.

## Patentansprüche

1. Optoelektronischer Sensor (10), insbesondere Laserscanner, zur Erfassung von Objekten in einem Überwachungsbereich (20), der eine um eine Drehachse (18) bewegliche Abtasteinheit (12, 58), mehrere Abtastmodule (22) zur periodischen Abtastung des Überwachungsbereichs (20) und zum Erzeugen von entsprechenden Empfangssignalen sowie eine Auswertungseinheit (48) zur Gewinnung von Informationen über die Objekte aus den Empfangssignalen aufweist, wobei die Abtastmodule (22) jeweils mindestens einen Lichtsender (24) zum Aussenden mehrerer voneinander separierter Lichtstrahlen (28) als Abtaststrahlen und mindestens einen Lichtempfänger (36) zum Erzeugen der Empfangssignale aus den von Objekten remittierten Lichtstrahlen (32) umfassen, wobei mehrere Abtastmodule (22) mit ihrer durch eine mittlere Richtung ihrer Abtaststrahlen gegebenen Hauptblickrichtung um einem Drehwinkel (y) aus einer aufrechten Orientierung um eine Achse entsprechend der Hauptblickrichtung verdreht angeordnet sind, somit eine nicht aufrechte Orientierung bis hin zu auf der Seite liegend aufweisen, wobei mit zunehmendem Drehwinkel (y) die Abtaststrahlen in Höhenrichtung längs der Drehachse (18) dichter zusammenrücken, und **dadurch gekennzeichnet, dass** mehrere Abtastmodule (22) mit unterschiedlichen Drehwinkeln kombiniert sind.

2. Sensor (10) nach Anspruch 1,
wobei die Abtastmodule in der Abtasteinheit (12) untergebracht sind.

3. Sensor (10) nach Anspruch 1 oder 2,
wobei ein Kippwinkel (β), um den ein Abtastmodul (22) verkippt ist und der gegen eine zentrale Abtastebene senkrecht zu der Drehachse (18) gemessen ist, und/oder der Drehwinkel (γ) statisch ist und/oder wobei der Kippwinkel (β) in einer Umgebung von Null liegt, insbesondere im Bereich von ±60°.

4. Sensor (10) nach einem der vorhergehenden Ansprüche,
der zwei bis zehn Abtastmodule (22) aufweist und/oder wobei ein Abtastmodul (22) zwei bis zehn Lichtstrahlen (28, 32) erzeugt

5. Sensor (10) nach einem der vorhergehenden Ansprüche,
wobei Lichtstrahlen (28, 32) eines Abtastmoduls (22) einen gegenseitigen Winkelversatz (α) aufweisen.

6. Sensor (10) nach einem der vorhergehenden Ansprüche,
wobei die Abtastmodule (22) derart verdreht (γ) und/oder um einen Kippwinkel (β) verkippt sind, der gegen eine zentrale Abtastebene senkrecht zu der Drehachse (18) gemessen ist, dass Abtastebenen mit gleichmäßigem Winkelabstand entstehen.

7. Sensor (10) nach einem der Ansprüche 1 bis 5,
wobei die Abtastmodule (22) derart verdreht (γ) und/oder um einen Kippwinkel (β) verkippt sind, der gegen eine zentrale Abtastebene senkrecht zu der Drehachse (18) gemessen ist, dass in zumindest einem Winkelbereich Abtastebenen mit dichterem Winkelabstand entstehen.

8. Sensor (10) nach einem der vorhergehenden Ansprüche,
wobei die Abtastmodule (22) derart verdreht (γ) und/oder um einen Kippwinkel (β) verkippt sind, der gegen eine zentrale Abtastebene senkrecht zu der Drehachse (18) gemessen ist, dass zumindest einige mehrfach abgetastete Abtastebenen entstehen.

9. Sensor nach einem der vorhergehenden Ansprüche,
wobei die Abtastmodule (22) derart verdreht (γ) und/oder um einen Kippwinkel (β) verkippt sind, der gegen eine zentrale Abtastebene senkrecht zu der Drehachse (18) gemessen ist, dass zumindest ein Winkelbereich ohne Abtastebenen entsteht und/oder dass Abtastebenen eines Abtastmoduls (22) zwischen Abtastebenen eines anderen Abtastmoduls (22) liegen.

10. Sensor (10) nach einem der vorhergehenden Ansprüche,
wobei die Abtasteinheit (12) eine Vielzahl von Montageplätzen (56) für Abtastmodule (22) aufweist, die insbesondere nicht alle mit einem Abtastmodul (22) besetzt sind.

11. Sensor (10) nach einem der vorhergehenden Ansprüche,
wobei die Abtastmodule (22) untereinander identisch aufgebaut sind und/oder wobei zumindest einige Abtastmodule (22) übereinander und/oder in Drehrichtung zueinander versetzt angeordnet sind.

12. Sensor (10) nach einem der vorhergehenden Ansprüche,
wobei in einem Abtastmodul (22) mehrere Lichtstrahlen (28, 32) im Querschnitts in einem zweidimensionalen Muster angeordnet sind.

13. Sensor (10) nach einem der vorhergehenden Ansprüche,
wobei mindestens zwei Abtastmodule (22) eine gemeinsame Leiterplatte (54) aufweisen.

14. Sensor (10) nach einem der vorhergehenden Ansprüche,
wobei die Auswertungseinheit (48) dafür ausgebildet ist, aus einer Lichtlaufzeit zwischen Aussenden der Lichtstrahlen (28) und Empfangen der remittierten Lichtstrahlen (329 einen Abstand des Objekts zu bestimmen.

15. Verfahren zur Erfassung von Objekten in einem Überwachungsbereich (20), der mit Hilfe einer um eine Drehachse (18) beweglichen Abtasteinheit (12, 58) mit mehrere Abtastmodulen (22) periodisch abgetastet wird, wobei die Abtastmodule (22) jeweils mehrere voneinander separierte Lichtstrahlen (28) als Abtaststrahlen aussenden, nach Remission an den Objekten als remittierte Lichtstrahlen (32) wieder empfangen und entsprechende Empfangssignale erzeugen, und wobei die Empfangssignale zur Gewinnung von Informationen über die Objekte ausgewertet werden, wobei durch Verdrehen mehrerer Abtastmodule (22) um ihre durch eine mittlere Richtung seiner Abtaststrahlen gegebene Hauptblickrichtung um einem Drehwinkel (γ) aus einer aufrechten Orientierung um eine Achse entsprechend der Hauptblickrichtung, somit eine nicht aufrechte bis hin zu auf der Seite liegende Orientierung, wobei mit zunehmendem Drehwinkel (γ) die Abtaststrahlen in Höhenrichtung längs der Drehachse (18) dichter zusammenrücken, eine Anordnung von Abtastebenen festgelegt wird und **dadurch gekennzeichnet, dass** mehrere Abtastmodule (22) mit unterschiedlichen Drehwinkeln kombiniert werden.

## Claims

1. An optoelectronic sensor (10), in particular a laser scanner, for detecting objects in a monitoring region (20), the sensor (10) having a scanning unit (12, 58) movable about an axis of rotation (18), a plurality of scanning modules (22) for periodically scanning the monitoring region (20) and for generating corresponding received signals, and an evaluation unit (48) for obtaining information about the objects from the received signals, the scanning modules (22) each comprising at least one light transmitter (24) for transmitting several light beams (28) separated from one another as scanning beams and at least one light receiver (36) for generating the received signals from the light beams (32) remitted by the objects, wherein a plurality of scanning modules (22) are rotated, with their main viewing direction defined by the average direction of their scanning beams, by a rotation angle (γ) from their upright orientation with respect to an axis corresponding to the main viewing direction, thus having an orientation that is not upright up to lying on their side, wherein the scanning beams move closer together in a height direction along the axis of rotation (18) with increasing rotation angle (γ),
**characterized in that** a plurality of scanning modules (22) of different rotation angle are combined.

2. The sensor (10) according to claim 1,
wherein the scanning modules are accommodated in the scanning unit (12).

3. The sensor (10) according to claim 1 or 2,
wherein a tilt angle (β), i.e. an angle that a scanning module (22) is tilted by and that is measured with respect to a central scanning plane perpendicular to the axis of rotation (18), and/or the rotation angle (γ) are fixed and/or the tilt angle (β) is in an interval including 0°, in particular is in the range of ±60°.

4. The sensor (10) according to any of the preceding claims,
the sensor (10) comprising two to ten scanning modules (22) and/or wherein a scanning module (22) generates two to ten light beams (28, 32).

5. The sensor (10) according to any of the preceding claims,
wherein light beams (28, 32) of a scanning module (22) have a mutual angular offset (α).

6. The sensor (10) according to any of the preceding claims,
wherein the scanning modules (22) are rotated (γ) and/or tilted by a tilt angle (β) that is measured with respect to a central scanning plane perpendicular to the axis of rotation (18) in such a way that scanning planes with uniform angular spacing are generated.

7. The sensor (10) according to any of claims 1 to 5,
wherein the scanning modules (22) are rotated (γ) and/or tilted by a tilt angle (β) that is measured with respect to a central scanning plane perpendicular to the axis of rotation (18) in such a way that scanning planes with a denser angular spacing are generated in at least one angular range.

8. The sensor (10) according to any of the preceding claims,
wherein the scanning modules (22) are rotated (γ) and/or tilted by a tilt angle (β) that is measured with respect to a central scanning plane perpendicular to the axis of rotation (18) in such a way that at least some scanning planes are generated which are redundantly scanned.

9. The sensor (10) according to any of the preceding claims,
wherein the scanning modules (22) are rotated (γ) and/or tilted by a tilt angle (β) that is measured with respect to a central scanning plane perpendicular to the axis of rotation (18) in such a way that at least one angular range without scanning planes is generated and/or that scanning planes of a scanning module (22) are arranged between scanning planes of another scanning module (22).

10. The sensor (10) according to any of the preceding claims,
wherein the scanning unit (12) comprises a plurality of mounting locations (56) for scanning modules (22), wherein in particular not all of the mounting locations (56) are occupied by a scanning module (22).

11. The sensor (10) according to any of the preceding claims,
wherein the scanning modules (22) are of identical construction to one another and/or wherein at least some scanning modules (22) are arranged one above the other and/or offset with respect to one another in the direction of rotation.

12. The sensor (10) according to any of the preceding claims,
wherein in at least one scanning module (22) a plurality of light beams (28, 32) are arranged in a two-dimensional pattern in cross-section.

13. The sensor (10) according to any of the preceding claims,
wherein at least two scanning modules (22) have a common circuit board (54).

14. The sensor (10) according to any of the preceding claims,
wherein the evaluation unit (48) is configured to determine a distance of the object by means of a light time of flight between transmitting the light beams (28) and receiving the remitted light beams (32).

15. A method for detecting objects in a monitoring region (20) which is periodically scanned by means of a scanning unit (12, 58) movable about an axis of rotation (18) and having a plurality of scanning modules (22), wherein the scanning modules (22) each transmit a plurality of light beams (28) which are separated from one another as scanning beams, receive them again as remitted light beams (32) after remission at the objects and generate corresponding received signals, and wherein the received signals are evaluated in order to obtain information about the objects, wherein an arrangement of scanning planes is defined by rotating a plurality of scanning modules (22), with their main viewing direction defined by the average direction of their scanning beams, by a rotation angle (γ) from their upright orientation with respect to an axis corresponding to the main viewing direction, thus an orientation that is not upright up to lying on their side, wherein the scanning beams move closer together in a height direction along the axis of rotation (18) with increasing rotation angle (γ), **characterized in that** a plurality of scanning modules (22) of different rotation angle are combined.

## Revendications

1. Capteur optoélectronique (10), en particulier scanner laser, pour détecter des objets dans une zone à surveiller (20), comprenant une unité de balayage (12, 58) mobile autour d'un axe de rotation (18), plusieurs modules de balayage (22) pour balayer périodiquement la zone à surveiller (20) et pour générer des signaux de réception correspondants, ainsi qu'une unité d'évaluation (48) pour obtenir des informations sur les objets à partir des signaux de réception, dans lequel les modules de balayage (22) comprennent chacun un émetteur de lumière (24) pour émettre plusieurs faisceaux lumineux (28) séparés les uns des autres à titre de faisceaux de balayage et au moins un récepteur de lumière (36) pour générer les signaux de réception à partir des faisceaux lumineux (32) réémis par des objets, et plusieurs module de balayage (22) sont agencés avec leur direction de visée principale, définie par une direction moyenne de leurs faisceaux de balayage, en étant tournés d'un angle de rotation (γ) à partir d'une orientation verticale autour d'un axe correspondant à la direction visée principale et présentent ainsi une orientation non verticale jusqu'à se coucher sur le côté, et avec un angle de rotation (γ) croissant, les faisceaux de balayage se rapprochent dans la direction de la hauteur le long de l'axe de rotation (18),
**caractérisé en ce que**
plusieurs modules de balayage (22) ayant différents angles de rotation sont combinés.

2. Capteur (10) selon la revendication 1, dans lequel les modules de balayage sont logés dans l'unité de balayage (12).

3. Capteur (10) selon la revendication 1 ou 2, dans lequel un angle d'inclinaison (β) duquel un module de balayage (22) est incliné et qui est mesuré par rapport à un plan de balayage central perpendiculaire à l'axe de rotation (18), et/ou l'angle de rotation (γ) est statique, et/ou l'angle d'inclinaison (β) est au voisinage de zéro, en particulier dans la plage de ±60°.

4. Capteur (10) selon l'une des revendications précédentes, qui comprend deux à dix modules de balayage (22), et/ou dans lequel un module de balayage (22) génère deux à dix faisceaux lumineux (28, 32).

5. Capteur (10) selon l'une des revendications précédentes, dans lequel des faisceaux lumineux (28, 32) d'un module de balayage (22) ont un décalage angulaire mutuel (α).

6. Capteur (10) selon l'une des revendications précédentes, dans lequel les modules de balayage (22) sont tournés (γ) et/ou sont inclinés d'un angle d'inclinaison (β), mesuré par rapport à un plan de balayage central perpendiculaire à l'axe de rotation (18), de telle sorte qu'il en résulte des plans de balayage avec une distance angulaire régulière.

7. Capteur (10) selon l'une des revendications 1 à 5, dans lequel les modules de balayage (22) sont tournés (γ) et/ou inclinés d'un angle d'inclinaison (β), mesuré par rapport à un plan de balayage central perpendiculaire à l'axe de rotation (18), de telle sorte qu'il en résulte des plans de balayage avec une distance angulaire plus dense dans au moins une plage angulaire.

8. Capteur (10) selon l'une des revendications précédentes, dans lequel les modules de balayage (22) sont tournés (γ) et/ou inclinés d'un angle d'inclinaison (β), mesuré par rapport à un plan de balayage central perpendiculaire à l'axe de rotation (18), de telle sorte qu'il en résulte au moins quelques plans de balayage balayés plusieurs fois.

9. Capteur selon l'une des revendications précédentes, dans lequel les modules de balayage (22) sont tournés (γ) et/ou inclinés d'un angle d'inclinaison (β), mesuré par rapport à un plan de balayage central perpendiculaire à l'axe de rotation (18), de telle sorte qu'il en résulte au moins une plage angulaire dépourvu de plan de balayage, et/ou que des plans de balayage d'un module de balayage (22) se trouvent entre des plans de balayage d'un autre module de balayage (22).

10. Capteur (10) selon l'une des revendications précédentes, dans lequel l'unité de balayage (12) comprend une multitude d'emplacements de montage (56) pour des modules de balayage (22), qui ne sont en particulier pas tous occupés par un module de balayage (22).

11. Capteur (10) selon l'une des revendications précédentes, dans lequel les modules de balayage (22) sont conçus de manière identique les uns aux autres, et/ou au moins quelques-uns des modules de balayage (22) sont disposés les uns au-dessus des autres et/ou décalés les uns par rapport aux autres dans la direction de rotation.

12. Capteur (10) selon l'une des revendications précédentes, dans lequel dans un module de balayage (22), plusieurs faisceaux lumineux (28, 32) sont disposés en section transversale selon un motif bidimensionnel.

13. Capteur (10) selon l'une des revendications précédentes, dans lequel au moins deux modules de balayage (22) comprennent une carte à circuit imprimé commune (54).

14. Capteur (10) selon l'une des revendications précédentes, dans lequel l'unité d'évaluation (48) est réalisée pour déterminer une distance de l'objet à partir d'un temps de parcours de lumière entre l'émission des faisceaux lumineux (28) et la réception des faisceaux lumineux réémis (32).

15. Procédé pour détecter des objets dans une zone à surveiller (20) qui est balayée périodiquement à l'aide d'une unité de balayage (12, 58) mobile autour d'un axe de rotation (18) et comportant plusieurs modules de balayage (22), dans lequel les modules de balayage (22) émettent chacun plusieurs faisceaux lumineux (28) séparés les uns des autres en tant que faisceaux d'émission, les reçoivent en tant que faisceaux lumineux (32) réémis après réémission sur les objets, et génèrent des signaux de réception correspondants, et les signaux de réception sont évalués pour obtenir des informations sur les objets, et un agencement de plans de balayage est déterminé par rotation de plusieurs modules de balayage (22) autour de leur direction de visée principale, définie par une direction moyenne de leurs faisceaux de balayage, d'un angle de rotation (γ) à partir d'une orientation verticale autour d'un axe correspondant à la direction de visée principale vers une orientation non verticale jusqu'à se coucher sur le côté, et avec un angle de rotation (γ) croissant, les faisceaux de balayage se rapprochent dans la direction de la hauteur le long de l'axe de rotation (18),
**caractérisé en ce que**
plusieurs modules de balayage (22) ayant différents angles de rotation sont combinés.
